# EUROPEAN PATENT APPLICATION

(11) **EP 1 347 386 A2**
(43) Date of publication of application: **24.09.2003**
(21) Application number: 03006367.1
(22) Date of filing: 20.03.2003
(51) Int. Cl.: G06F 13/12, G06F 13/38

(54) **Data transfer system**

(30) Priority: 20.03.2002 JP 2002078431
(71) Applicant: Sanyo Electric Co., Ltd., Moriguchi-shi, Osaka 570-8677 (JP)
(72) Inventor: Yamada, Susumu, Ora-gun, Gunma-ken (JP); Kondo, Hideo, Ora-gun, Gunma-ken (JP)
(74) Representative: Glawe, Delfs, Moll & Partner

(57) **Abstract**

A USB device (200) includes a key-input device (204) for controlling data transfer. USB interfaces are provided with pipes for transferring data which connect endpoints severally provided in a personal computer (110) and the USB device (200). Data transfer is performed through the pipes for transferring data in response to key-operated input information by the key-input device (204). Consequently, operations such as search and selection of a data file on the personal computer (100), start execution of data transfer and a halt of data transfer, can be performed not only by the personal computer (100) but also by the device (204).

## Description

### BACKGROUND OF THE INVENTION

### Field of the Invention

The invention relates to a data transfer system which performs data transfer through USB interfaces separately provided in a host and a peripheral device, which are connected through a USB communication line.

### Description of the Related Art

In recent years, USB (Universal Serial Bus) communication has been increasingly used to promote an easy pug-in of a peripheral device for a computer. The USB is a serial interface standard which is devised in consideration of the convenience for a user and can be used in common with a communication between a peripheral device, such as a keyboard, a mouse, a camera, a printer, a scanner and a speaker, and a computer.

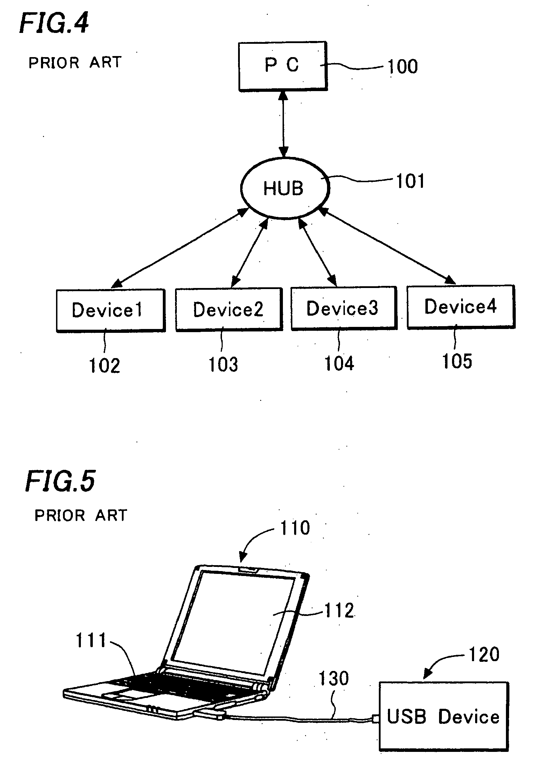

Fig. 4 is a diagram showing an example of a connecting scheme of a personal computer and peripheral devices utilizing the USB. A computer 100 and a hub 101 can be connected through a USB cable, and peripheral devices 102-105 can be connected to the hub 101, which resides at a layer level lower than that of the computer 100. The peripheral devices 102 to 105 are managed by the personal computer 100. Thus, the USB is a so-called bi-directional communicable serial bus having a network structure of a multi-star type.

The USB cable includes four signal lines. Two of them are used for a power source and the others are used for data transfer utilizing the USB. The USB data is basically handled as differential data (D⁺, D-). Moreover, the data transfer utilizing the USB is subjected to time sharing based on the concept that a transfer unit is a frame, and is carried out by superposing the frame. One frame starts with an SOF (Start of Frame) packet. The host personal computer sequentially transmits a data transfer request token (for example, a data input request sent from a keyboard or a camera and a request for outputting voice data) scheduled within the started frame in advance, thereby carrying out the data transfer together with a plurality of peripheral devices at the same time.

Descriptions of the USB technologies are found in, for example, Interface, January issue, 1997 and Japanese Laid-open Patent Publication No. H11 205412.

Fig. 5 shows a conventional use of the USB connection. A personal computer 110 and a device 120 are connected through a USB cable 130. In this data transfer system, operating commands such as search and selection of data to be transferred to the device among a plurality of file data (for example, music data or image data) stored in a disk of the personal computer 110, start execution of data transfer of the selected file data, and halt of the data transfer are input by a user from a keyboard 111 of the personal computer 110. Screens for selecting file data and for indicating the status of the data transfer or the halt thereof are displayed on a CRT 112 of the personal computer 110.

As described above, operations such as the search and selection of file data, the start execution of the data transfer and the halt of the data transfer on the personal computer 110 have to be performed on the side of the personal computer 110. This can be inconvenient for some kinds of applications.

### SUMMARY OF THE INVENTION

It is an object of this invention to provide a data transfer system that is more versatile.

The solution according to the invention lies in the features of the independent claim and preferably in those of the dependent claim.

The invention provides a data transfer system including a computer provided with a first USB port, a peripheral device provided with a second USB port and having an information input device, and a USB communication line connecting the first and second USB ports. The system is configured so that the peripheral device takes a control of an operation of the computer through a USB connection.

According to the data transfer system of this invention, operations such as search and selection of file data on the personal computer, an execution of a start of a data transfer or a halt of the data transfer can be performed by operating on the USB devices as well as the host computer. This system provides a user with a wide range of system configuration options and an easy system operation.

### BRIEF DESCRIPTION OF THE DRAWINGS

Fig. 1 shows a connection of a USB data transfer system according to an embodiment of the invention.
Fig. 2 shows a communication scheme of the USB data transfer system of Fig. 1.
Fig. 3 shows an example of a data transfer of the USB data transfer system of Fig. 1.
Fig. 4 shows a conventional USB data transfer scheme.
Fig. 5 shows a conventional USB data transfer system.

### DETAILED DESCRIPTION OF THE INVENTION

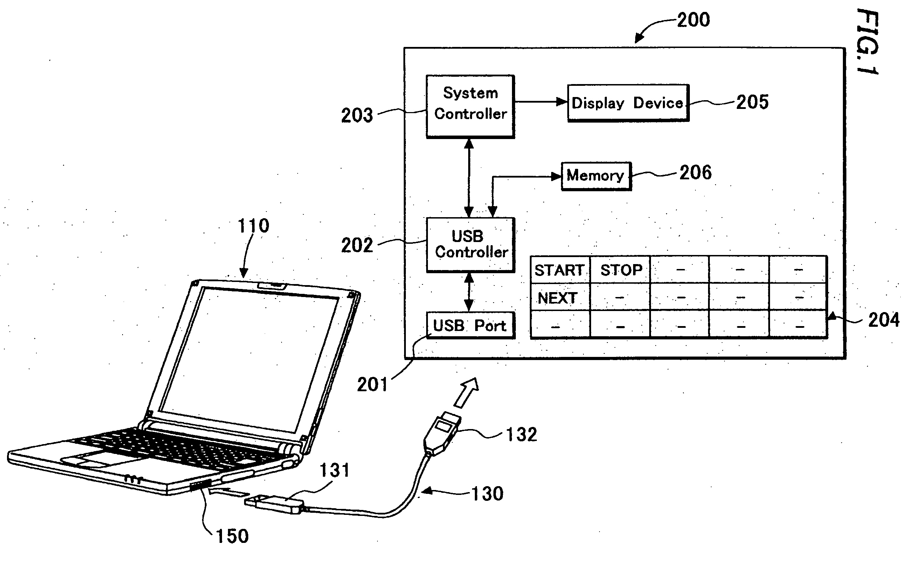

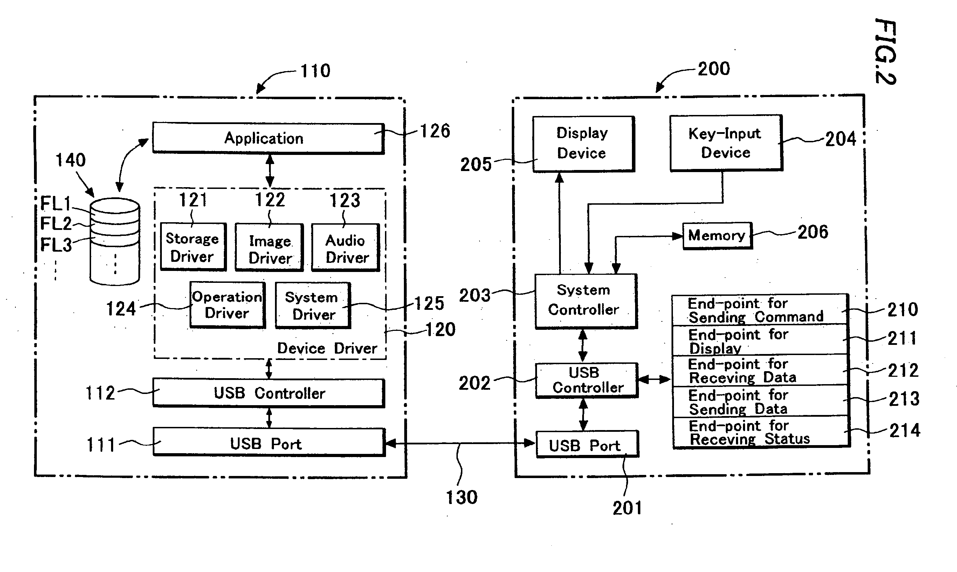

An embodiment of the invention will be described with reference to the Figs. 1-3. Fig. 1 is a schematic diagram showing a data transfer system according to this embodiment, and Fig. 2 is a diagram showing a system configuration thereof.

This system is configured by connecting a personal computer (a host) 110 to a USB device 200 through a USB communication cable 130. One USB connector 131 of the USB communication cable 130 is connected to a USB port 150 of the personal computer 110, and another connector 132 is connected to a USB port 201 of the USB device 200.

The configuration of the USB device 200 will be described first. The USB device 200 is provided with a USB port 201 and a USB controller 202 for a USB interface. The USB port 201 is a port for inputting and outputting USB data, the USB controller 202 performs an error check of the data, format conversion of USB data (for example, conversion between serial differential data D+ and D- and parallel data), control of the USB port 201.

The connection of the USB device 200 and the personal computer 110 enables the USB interface to establish a pipe for sending a command from the USB device 200 to the personal computer 110, a pipe for a display, a pipe for receiving the data, a pipe for sending data, and a pipe for receiving status from the personal computer 110 to the USB device 200.

The term "pipe" is used herein to refer to a data transport connection between an end-point buffer provided in the USB device 200 and an end-point buffer provided correspondingly in the personal computer 110. Data transfer is performed between the end-point buffers through the virtual "pipes," although the data is physically transferred through the USB cable 130.

The end-point buffers are provided with an end-point for sending a command 210, an end-point for a display 211, an end-point for receiving data 212, an end-point for sending data 213, an end-point for receiving status 214, among other end-points. These end-point buffers may be a buffer mapped in the RAM of a microcomputer or a buffer provided in the USB controller 202. Each of these end-point buffers is assigned an addresses at initialization on device connection, enabling each of functions thereof to be implemented.

A system controller 203 controls various blocks of the USB device 200, for example, a key-input device 204, a display device 205 and a memory 206. The key-input device 204 is a device for inputting a variety of information of operation (for example, selection, a start and a halt of data transfer, a file name change, and a folder name change). The information entered by the key-input device 204 is converted to data rows in a predetermined USB format through the system controller 203 and the USB controller 202, to be sent to an end-point for sending a command 210.

The display device 205 displays information of file selection or system status based on the data in the end-point for a display 211 or the end-point for receiving status 214. The display device 205 includes a display controller performing display control, and may include a liquid crystal display panel or an EL display panel.

The memory 206 is used for temporarily storing file data (for example, music data or compressed image data transferred from the personal computer 110).

Next, a configuration of the personal computer 110 will be described. The personal computer 110 is provided with the USB port 150 and the USB controller 112 for a USB interface. The USB port 150 is a port for inputting and outputting the USB data. The USB controller 112 is a computer program performing an error check of data and control of the USB port 201.

The USB controller 112 establishes an interface with the device driver 120, including format conversion of USB data (for example, conversion between serial differential data D+ and D- and parallel data), application of a device address and an adjustment of timing for data transfer.

The device drivers 120 includes various programs such as a storage driver 121, an image driver 122, an audio driver 123, an operating driver 124 (for example, an HID driver) and a system rewriting driver 125. These device drivers 120 are interfaced with a high level application program 126 so that data and commands are exchanged between them based on a predetermined arrangement.

A hard disk 140 stores a plurality of file data FLs, which may be transferred in a predetermined form. These file data FLs are configured to be accessible by the application program 126.

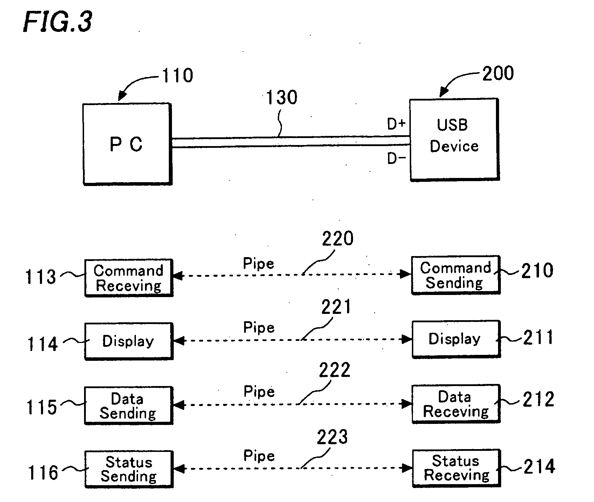

Next, there will be described an example of an operation of the data transfer system having the above configuration. Fig. 3 is a schematic diagram describing the data transfer. To establish a connection between the USB device 200 and the personal computer 110 through the USB communication cable 130, the personal computer 110 recognizes the connection of the USB device 200 based on an alteration of a data line of the USB communication cable 130.

Then, the system is initialized and the USB device 200 is provided with an end-point for sending a command 210, an end-point for a display 211, an end-point for sending data 213, and an end-point for receiving status 214. The personal computer 110 is provided with end-points 113, 114, 115, 116, corresponding to each of the end-points of the USB device 200, and pipes are provided between the corresponding end-points.

Key-operated information (for example, command information such as the selection of file data to be transferred, the start of transferring the selected file data and the halt of the transfer, a change of a folder to be stored with the file data, a file name change, a folder name change or a control of an application program) input by a user with the key-input device 204 of the USB device 200 is sent through the system controller 203 and the USB controller 202 to a corresponding end-point buffer of the USB device 200, for example, the end-point for sending a command 210, and transferred to the personal computer 110 through a pipe for transferring a command 220.

The personal computer 110 performs processing of the received command. For example, when the command is to start a data transfer, the personal computer 110 transfers the selected file data through the pipe for sending data 222 to a predetermined end-point buffer on the side of the USB device 200, for example, the end-point for receiving data 212.

The personal computer 110 transfers current status information (for example, transferring data) of the personal computer 110 to a predetermined end-point buffer of the USB device 200, for example, the end-point for receiving status 214, through a pipe for sending status 223. Then, this status is displayed in the display device 205. This enables the confirmation on the side of the USB device 200 whether or not the command is certainly executed by the personal computer 110.

Next, there will be described an example that music file data is transferred from the personal computer 110 to the USB device 200 when the USB device 200 is an audio device provided with a speaker.

When a command to select the music file data is entered by the key-input device 204, a predetermined data row corresponding to the selection command to the personal computer 110 through the pipe for transferring a command 220. The personal computer 110 receives the data row at the end-point. Then, the data row is interpreted and recognized of the selection command by an application program activated at that time.

A music file name (for example, a music title or an artist name) is sent to the end-point for a display 211 of the USB device 200 through the pipe for a display 221. The selected music file name is displayed on the display device 205.

When a command to start transfer is entered by the key-input device 204, a predetermined data row corresponding to the command to start transfer is transferred to the personal computer 110 through the pipe for transferring a command 220. The personal computer 110 receives the data row at the end-point.

In the same manner, the data row is interpreted and recognized as the command to start transfer. The selected music file data is sent to the USB device 200 through the pipe for sending data 222 and received by the end-point for receiving data 212. The music file data received on the side of the USB device 200 is input to a speaker through an audio reproduction circuit and a DA converter (not shown) and the music is played.

The status of the personal computer 110, i.e., the information that the music file data is being transferred, is transferred to a predetermined end-point buffer of the USB device 200, for example, the end-point for receiving status 214, through a pipe for sending status 223 of the personal computer 110, thereby to be displayed on the display device 205.

This embodiment is applied to a wide range of data transfer between a host and a USB device each of which has a USB interface. For example, a host could be a server provided with a USB interface. The USB device 200 may be a video device, an image reproduction device, a printer device, or an audio reproduction device, among other devices.

## Claims

1. A data transfer system comprising:
- a computer (110) provided with a first USB port (150);
- a peripheral device (200) provided with a second USB port (201) and comprising an information input device (204); and
- a USB communication line (130) connecting the first and second USB ports (150, 201),
wherein the system is configured so that the peripheral device (200) takes a control of an operation of the computer (110) through a USB connection.

2. The data transfer system of claim 1, wherein the USB connection comprises at least a connection between an end-point provided at the computer and an end-point provided at the peripheral device, and data is transferred through the connection between the two end-points in response to a command entered at the information input device.

3. The data transfer system of claim 2, wherein the end-point is an end-point for receiving data (212), an end-point for sending data (213), an end-point for displaying information (211), an end-point for sending a command (210) or an end-point for receiving a status (214).

4. The data transfer system of claim 2 or 3, wherein the command is to search and select data, to start a transfer data, to halt a transfer of data, to change a file name or a folder name, or to control application software.

5. The data transfer system of claim 3 or 4, wherein the peripheral device (200) comprises a display device (205), and the display device operates in response to data transferred from the computer (110) through the end-point for displaying information (211) and the end-point for receiving a status (214).
